# EUROPÄISCHE PATENTSCHRIFT

(11) **EP 3 725 654 B1**
(45) Veröffentlichungstag und Bekanntmachung des Hinweises auf die Patenterteilung: **12.10.2022**
(21) Anmeldenummer: 19174645.2
(22) Anmeldetag: 15.05.2019
(51) Int. Cl.: B62D 65/18, B65G 49/04

(54) **FÖRDERANLAGE**
CONVEYOR SYSTEM
INSTALLATION DE TRANSPORT

(30) Priorität: 27.06.2018 DE 102018115485
(43) Veröffentlichungstag der Anmeldung: 21.10.2020
(73) Patentinhaber: pentanova cs GmbH, 71032 Böblingen (DE)
(72) Erfinder: Riegraf, Martin, 72766 Reutlingen (DE)
(74) Vertreter: Patentanwälte Vomberg & Schart

(56) Entgegenhaltungen:
- WO-A1-2009/000438
- WO-A1-2012/031680
- WO-A1-2017/178317
- CN-A- 107 963 089
- DE-A1- 2 545 907
- DE-A1-102015 003 736

## Beschreibung

Die vorliegende Erfindung betrifft eine 1-spurige Förderanlage, insbesondere eine 1-spurige Elektrobodenbahn, mit einer Tragschiene, die eine obere Antriebslauffläche und mindestens eine links- und eine rechtsseitige Ablauffläche besitzt und einem auf der Tragschiene verfahrbaren Transportwagen mit einem Fahrwerk aus mindestens einem Antriebsrad, das auf der Antriebslauffläche der Tragschiene abrollt, und seitlichen Führungsrädern, die auf den links- und rechtsseitigen Ablaufflächen der Tragschiene abrollen.

Förderanlagen und Tragschiene der eingangs genannten Art sind nach dem Stand der Technik bekannt und in unterschiedlichen Produktionsanlagen installiert, wie beispielsweise in Produktionsanlagen der Automobilindustrie. Um beispielsweise eine Karosserie als Werkstück durch eine Produktionsanlage zu führen, in der unterschiedliche Prozesse durchlaufen werden, ist die Karosserie auf dem Transportwagen angeordnet, der angetrieben auf der Tragschiene der Förderanlage verfahrbar ist. Auf einem solchen Transportwagen können die Karosserien vorgegebenen Pfaden der Produktionsanlagen folgen und in vorgegebener Reihenfolge unterschiedliche Prozesse durchlaufen.

DE 10 2015 003 736 A1 zeigt beispielsweise eine solche Förderanlage mit einer Tragschiene und einem hierauf verfahrbaren Transportwagen. Die Tragschiene ist seitlich über mehrere voneinander beabstandete C-förmige Träger am Boden befestigt, sodass die Aufhängung des Transportwagens, beziehungsweise die Aufhängung der Führungsrollen des Transportwagens, die Tragschiene von der anderen Seite her umgreift.

Bestimmte Abschnitte einer solchen Produktionsanlage werden von dem Transportwagen in beiden Richtungen befahren. Aufgrund der seitlichen Fahrwerksaufhängung und der seitlichen Befestigung der Tragschiene wird jedoch eine Drehung des Transportwagens um 180° während eines Prozesses verhindert, weil sich die Aufhängung und die Befestigung in einem solchen Fall beim Weiterverfahren blockieren. Bei Prozessen mit einer 180° Drehung des Transportwagens erfolgt daher stets eine zusätzliche 180° Drehung mittels einer Drehstation, was nicht nur die Taktzeit erhöht, sondern auch eine weitere Drehstation erfordert. Alternativ ist nach dem Stand der Technik vorgesehen, dass der Transportwagen rückwärts auf den Tragschienen fahren kann, was konstruktionsbedingt nur mit einer vergleichsweise geringen Geschwindigkeit möglich ist.

Hiervon ausgehend ist es die Aufgabe der vorliegenden Erfindung, eine 1-spurige Förderanlage anzugeben, die die Nachteile des Standes der Technik zumindest teilweise behebt und insbesondere die Taktzeit der Produktionsanlage sowie den apparativen Aufwand reduziert.

Diese Aufgabe wird durch die 1-spurige Förderanlage nach Anspruch 1 gelöst. Erfindungsgemäß ist vorgesehen, dass links- und rechtsseitig der Tragschiene zumindest abschnittsweise Stromschienen angeordnet sind, die mit mindestens einem Stromabnehmer des Transportwagens kontaktierbar sind und dass die Tragschiene an der der Antriebslauffläche gegenüberliegenden Seite eine mittelbare oder unmittelbare Bodenbefestigung aufweist, sodass der Transportwagen auf der Tragschiene in beide Richtungen und um 180° gedreht verfahrbar ist.

Die Tragschiene zeichnet sich damit gegenüber den nach dem Stand der Technik bekannten Tragschienen durch eine Befestigung am waagerechten Bereich der kurzen Querschnittsseite, wodurch eine Befahrung der Tragschiene mit einem Transportwagen in beide Richtungen und mit beliebiger Orientierung des Transportwagens möglich ist, also auch nach einer Änderung der Orientierung und mithin einer 180° Drehung des Transportwagens. Hierdurch ist eine weitere 180° Drehung im Falle einer prozessbedingten Drehung des Transportwagens entbehrlich, was den apparativen Aufbau sowie die Taktzeit reduziert. Auch für Schnellverbindungen zwischen Prozessen ist die erfindungsgemäße Vorrichtung vorteilbehaftet, weil die Verbindungsabschnitte in beide Richtungen und in beliebiger Orientierung durch die Transportwagen befahrbar sind.

Bevorzugte Ausführungsformen der Erfindung werden nachfolgend und in den Unteransprüchen beschrieben.

Nach einer ersten bevorzugten Ausführungsform ist zur Bodenbefestigung der Tragschiene eine Schienenklemmung vorgesehen, indem vorzugsweise beidseitig der Tragschiene Klemmelemente angeordnet sind, die einerseits jeweils in eine Nut der Tragschiene eingreifen und andererseits unmittelbar mit dem Boden oder einem Träger lösbar befestigt sind, wobei die mindestens eine Nut vorzugsweise unterhalb der Ablauffläche angeordnet ist. Eine solche Klemmung benötigt für eine hinreichende Stabilität maximal 10 % der Tragschienenhöhe, was die Bauhöhe der Anlage in zulässigen Grenzen hält.

Die erfindungsgemäße Befestigung der Tragschiene an der kurzen Querschnittseite ermöglicht zumindest abschnittsweise die bevorzugte Anordnung einer links- und einer rechtsseitigen Stromschiene, die mit mindestens einem Stromabnehmer des Transportwagens kontaktierbar sind. Hierdurch können die Transportwagen mit nur einem einzigen Stromabnehmer auf der Tragschiene in beide Richtungen und um 180° gedreht fahren.

Vorzugsweise sind links- und rechtsseitig der Tragschiene jeweils zwei vertikal voneinander beabstandete Ablaufflächen angeordnet, zwischen denen die Stromschienen verlaufen. Dabei ist die Bodenbefestigung der Tragschiene, insbesondere die Nuten zur Aufnahme der Klemmelemente, vorzugsweise unterhalb aller Ablaufflächen angeordnet, so dass der Transportwagen mit einer links- und rechtsseitigen Aufhängung der seitlichen Führungsräder frei auf der Tragschiene verfahrbar ist. Je weiter die Ablaufflächen in vertikaler Richtung voneinander beabstandet sind, desto stabiler ist der Transportwagen gegen Drehmomente um seine Längsachse gelagert, so dass ein in Abhängigkeit der Tragschienenhöhe größtmöglicher Abstand vorteilhaft ist.

Die Tragschiene ist vorzugsweise symmetrisch und im Wesentlichen als I-förmiges Aluminiumstrangpressprofil ausgebildet, wobei die seitlichen Ablaufflächen an den Außenflächen der horizontalen Abschnitte ausgebildet sind. Hierzwischen ist eine Verjüngung des Profils ausgebildet, wobei die bereits angesprochenen Stromschienen dem verjüngten Bereich der Tragschiene links- und rechtsseitig folgen. Damit die Stromschienen in Prozessen, bei denen die Werkstücke mit flüssigen Medien behandelt werden, beispielsweise in einer Lackieranlage, nicht beschmutzt werden, ragen die oberen Ablaufflächen seitlich derart über den verjüngten Bereich der Tragschiene hinaus, dass die Ablaufflächen als Tropfkanten ausgebildet sind. Abtropfende Medien gelangen somit nicht auf die Stromschienen und es ist ein störungsfreier Kontakt zwischen der Stromschiene und einem Stromabnehmer des Transportfahrzeugs gewährleistet.

Die Förderanlage und mithin die Tragschiene kann nicht nur gerade und eben verlaufen, sondern es können auch horizontale und vertikale Kurven vorhanden sein. Insbesondere im Falle von Steigungen innerhalb oder außerhalb eines Prozesses oder im Fall einer verschmutzen Antriebslauffläche ist in der Praxis zu beobachten, dass das Antriebsrad durchdrehen kann, was zu Vortriebsverlusten und zu einem fehlerhaften Transport des Werkstücks durch den Prozess führt. Der Antriebsverlust kann auch dadurch bedingt sein, dass das Werkstück zur Stabilisierung im Prozess auf separaten Gleitflächen abgestützt wird, wodurch das Antriebsrad entlastet wird. Um dennoch für einen gleichmäßigen Vortrieb zu sorgen, ist nach einer besonders bevorzugten Ausführungsform der Erfindung vorgesehen, dass das Antriebsrad des Transportwagens koaxial und drehfest mit einem Kettenrad verbunden ist, dass formschlüssig in ein korrespondierendes Profil eingreift und einen formschlüssigen Vortrieb schafft. Das Profil ist vorzugsweise eine Kette oder eine Zahnstange, die links- und/oder rechtsseitig der Antriebslauffläche in einer Aufnahme der Tragschiene vorzugsweise formschlüssig gelagert ist. Eine Kette hat gegenüber einer Zahnstange den Vorteil, dass eine Kette auch bogenförmig in die vorgesehene Aufnahme gelegt werden kann und dort spannbar ist. Demgegenüber ist die Form einer Zahnstange dem Kurvenverlauf anzupassen und die Zahnstange ist dementsprechend anzufertigen. Die Höhenlage der Kette ist vorzugsweise so gewählt, dass der Wirkdurchmesser des Kettenrades dem Durchmesser des Antriebsrades entspricht. Damit bei einer Abnutzung des Antriebsrades und der damit verbundenen Durchmesserverkleinerung die Last nicht auf dem Kettenrad liegt, ist gegenüber dem Kettenrad am Antriebsrad eine harte Rolle, beispielsweise aus Stahl oder ähnlichem, angebracht, so dass die Position des Wirkdurchmessers zur Kette verschleißunabhängig konstant bleibt.

Die Förderanlage und mithin die Tragschiene verbindet nach einer bevorzugten Ausgestaltung der Erfindung zwei Produktionsbereiche einer Produktionsanlage, insbesondere als
a) fest auf einer Bodenfläche montierte Fahrstrecke mit geraden und horizontal und/oder vertikal gekrümmten Abschnitten und/oder
b) bewegte Tragschiene auf einer Vertikalumsetzeinrichtung und/oder
c) bewegte Tragschiene auf einer Dreh- und Schwenkstation und/oder
d) bewegte Tragschiene auf einer Horizontalumsetzeinrichtung und/oder
e) bewegte Tragschiene in einer Fahrkursverzweigung (Weiche).

Die Produktionsanlage umfasst mindestens zwei der Teilbereiche Beladebereich, Entladebereich, Umsetzbereich, Pufferbereich, Bearbeitungs- oder Behandlungsbereich, Kontrollbereich, Reparaturbereich und/oder Wartungsbereich. In einem Ladebereich und/oder einem Umsetzbereich können Werkstücke manuell oder automatisch auf Transportwagen oder auf damit verbundene Warenträger geladen oder von diesen Entladen werden.

Pufferbereiche dienen zur temporären Lagerung der Waren oder der Warenträger. Hierbei können die Waren oder der Warenträger auf dem Transportwagen verbleiben oder von diesen auf spezielle Lagerungselemente übergeben beziehungsweise von diesen übernommen werden.

Bearbeitungs- oder Behandlungsbereiche sind beispielsweise:
- Fügebereiche, an denen Einzelteile gefügt werden (Rohbau),
- Oberflächenbehandlungsbereiche, wie beispielsweise Reinigungen oder eine Lackierung,
- Temperierbereiche, wie beispielsweise Öfen oder Kühlzonen,
- Montagebereiche für die Waren, beispielsweise Endmontage und/oder
- Kommissionierbereiche.

Alle genannten Bearbeitungen, Behandlungen, Kontrollen und/oder Reparaturen können dabei manuell und/oder maschinell erfolgen.

Konkrete Ausgestaltungen der vorliegenden Erfindung werden nachfolgend anhand der Figuren erläutert. Es zeigen:
- Fig. 1: Querschnitt einer nach dem Stand der Technik bekannten Förderanlage,
- Fig. 2a, b: Querschnitte einer Tragschiene und einer Förderanlage,
- Fig. 3a-f: unterschiedliche Anwendungsbereiche einer Förderanlage,
- Fig. 4a-e: eine Produktionsanlage mit unterschiedlichen Prozessen und
- Fig. 4f: Ausschnitt einer Produktionsanlage (Stand der Technik).

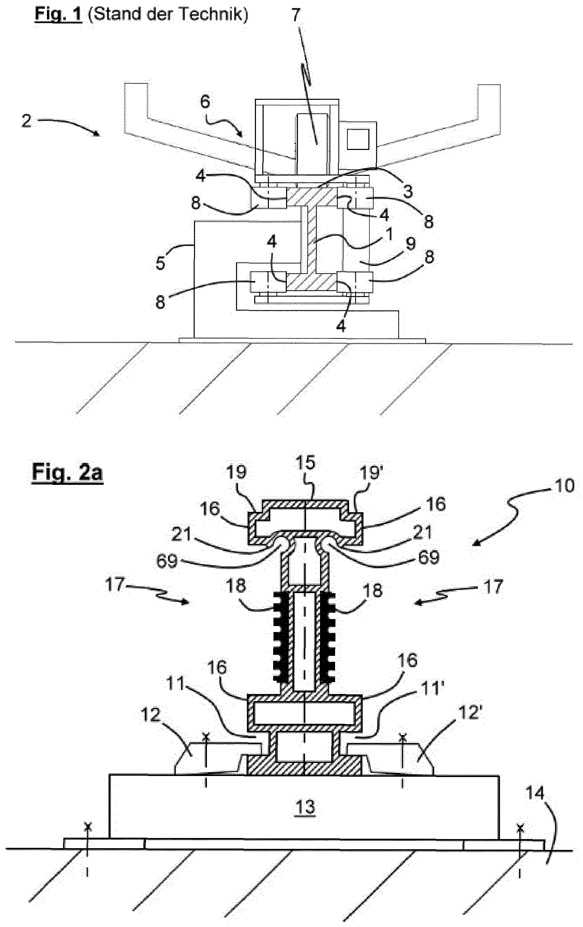

Fig. 1 zeigt eine Tragschiene 1 einer Förderanlage 2, wie sie nach dem Stand der Technik bekannt ist. Die Tragschiene 1 ist im Querschnitt I-förmig ausgestaltet und besitzt eine obere Antriebslauffläche 3 sowie insgesamt vier seitliche Ablaufflächen 4. Die Tragschiene 1 ist linksseitig an einem C-förmigen Träger 5 befestigt. Der Transportwagen 6 besitzt ein Fahrwerk, mit dem er auf der Transportschiene 1 verfahrbar gelagert ist. Das Fahrwerk besitzt eine angetriebene obere Antriebsrolle 7 und vier seitliche Führungsrollen 8. Die Fahrwerksaufhängung 9 umgreift rechtsseitig die Tragschiene 1, so dass ein Verfahren des Transportwagens 6 durch den C-förmigen Träger 5 nicht blockiert ist. Zwar können die Transportwagen 6 auf solchen Tragschienen vor und zurückfahren, allerdings ist eine 180°-Drehung insbesondere aufgrund der Lagerung der Tragschiene 1 nicht möglich. Hinzukommt, dass solche Tragschienen 1 nur einseitig eine Stromschiene aufweisen können, beziehungsweise vorhandene Stromschienen sind nur einseitig nutzbar.

Fig. 2a zeigt eine konkrete Ausführungsform einer erfindungsgemäßen Tragschiene 10, die ein Verfahren eines Transportwagens in beliebiger Richtung und in beliebiger Orientierung ermöglicht. Die Fahrschiene 10 ist im Querschnitt I-förmig ausgestaltet und besitzt am unteren Ende beidseitig Nuten 11, 11', in die Klemmelemente 12, 12' eingreifen. Die Klemmelemente 12, 12' sind über eine Bolzenverbindung über einen Träger 13 mittelbar mit dem Boden 14 verbunden.

Die Tragschiene 10 besitzt ferner eine obere Antriebslauffläche 15 und pro Seite jeweils zwei vertikal voneinander beabstandete Ablaufflächen 16. Zwischen den Ablaufflächen 16 bildet das Profil eine Einschnürung 17, die beidseitig eine Führung für Stromschienen 18 bildet.

Links- und rechtsseitig der Antriebslauffläche 15, sind Auflagen 19, 19' für formschlüssige Profile 20 ausgebildet, in die ein (in Fig. 2a nicht gezeigtes) Kettenrad eingreifen kann. Auf der Unterseite der oberen Ablaufflächen 16 sind Abtropfkanten 21 angeordnet, die verhindern, dass abtropfende Medien, wie beispielsweise Lackreste oder Kondensat auf die hierunter angeordneten Stromschienen 18 fallen. Im dargestellten Ausführungsbeispiel sind teilkreisförmige Stiftaufnahmen 69 vorgesehen, die zur Aufnahme von Verbindungsstiften (nicht dargestellt) ausgestaltet sind. Hierüber können zwei Tragschienen fluchtend miteinander verbunden werden, womit ein versatzfreier Übergang an den Antriebs- und Ablaufflächen 15, 16 entsteht. Die Stiftaufnahmen 69 umgreifen einen Teilkreis von mehr als 180°, womit sie im montierten Zustand eingesetzte Verbindungsstifte formschlüssig umgreifen.

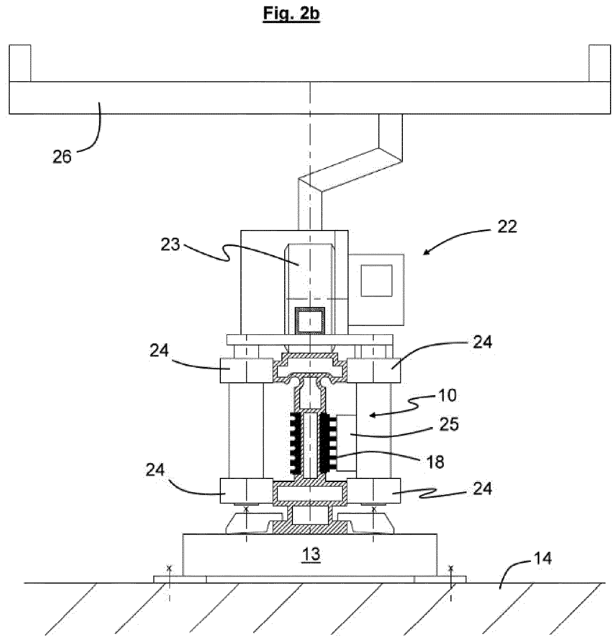

Auf einer solchen Tragschiene 10 ist ein Transportwagen 22 verfahrbar gelagert, wie er in Fig. 2b gezeigt ist. Der Transportwagen 22 besitzt ein Fahrwerk aus einem oberen Antriebsrad 23 und seitlichen Führungsrädern 24, die an einer Aufhängung angelenkt sind, die die Tragschiene 10 von oben umgreift. Der Transportwagen 22 besitzt einen Stromabnehmer 25, der in Fig. 2b die rechtsseitige Stromschiene 18 kontaktiert. Alternativ zu dem dargestellten Schleifleitungssystem kann der Transportwagen 22 als Stromversorgung einen Akkumulator, einen Kondensator und/oder ein Induktionssystem besitzen. Es sind auch Kombinationen in einer Produktionsanlage vorgesehen, zum Beispiel eine Stromversorgung durch einen Akkumulator oder Kondensator in explosionsgefährdeten Bereichen oder bewegten Schienenabschnitten, wobei die Aufladung des Akkus/Kondensators in anderen Schienenstreckenbereichen durch Induktion und/oder Schleifkontakte erfolgen kann. Der Transportwagen 22 ist mit einer Werkstückaufnahme 26 verbunden, die ein wie auch immer ausgestaltetes Werkstück trägt, beispielsweise eine Karosserie. Ein solcher Transportwagen 22 ist in beide Richtungen und mit beliebiger Orientierung auf der Tragschiene 10 verfahrbar.

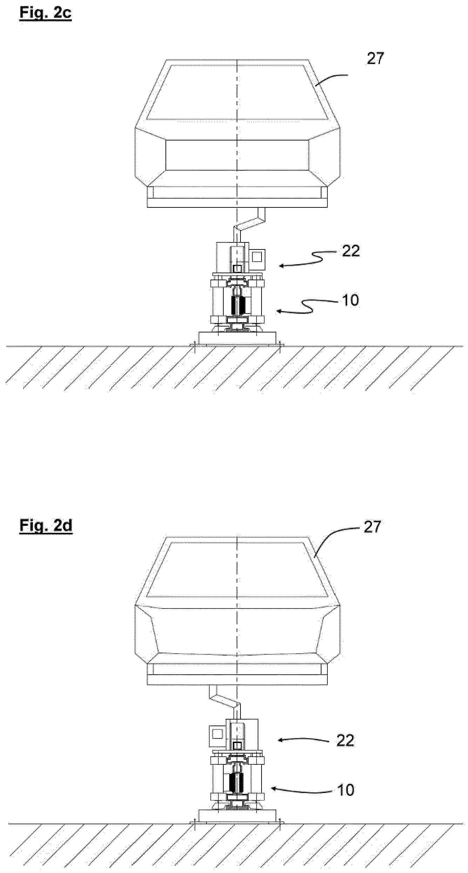

Die Fig. 2c und 2d zeigen beispielhaft den Transport einer Karosserie 27 als Werkstück in einem Streckenabschnitt, der beidseitig der Tragschiene 10 Stromschienen 18 aufweist. Der Transport erfolgt in die Blattebene hinein (Fig. 2c) und aus der Blattebene heraus (Fig. 2d).

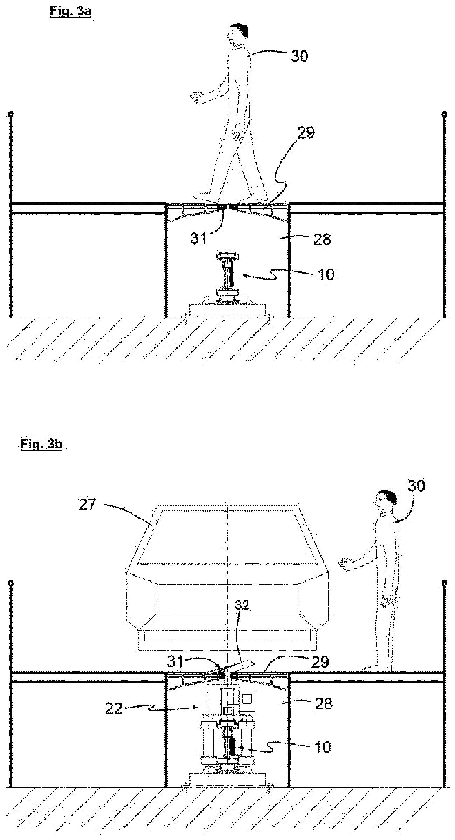

Die Fig. 3a bis f zeigen unterschiedliche Ausführungsformen und Anwendungen der vorliegenden Erfindung, bei denen der Transportwagen Teile einer Produktionsanlage durchfährt. Hierbei ist aufgrund von ungünstigen Umgebungsbedingungen für die Tragschiene bereichsweise eine räumliche Trennung zwischen der in einem Kanal (oder Fahrraum) angeordneten Tragschiene und dem Raum vorgesehen, in dem das Werkstück bearbeitet wird (Werkstückraum). Ungünstige Umgebungsbedingungen sind regelmäßig hohe oder niedrige Temperaturen, Feuchtigkeit und/oder eine Partikelbelastung der Umgebungsluft. Hierdurch ergeben sich Störungen elektrischer oder elektronischer Komponenten und es entsteht ein verminderter Reibschluss an den Kontaktstellen zwischen der Tragschiene und dem Transportwagen. Zur Vermeidung der ungünstigen Einflüsse ist insbesondere eine Trennung dieser Bereiche durch verschiedene mechanische Komponenten vorgesehen, wie beispielsweise horizontale und/oder vertikale Begrenzungen. Die Begrenzungen können bauliche Komponenten der Produktionsbereiche sein, wie beispielsweise Kabinenwände oder Begehungen. Ferner sind zur Verringerung von ungünstigen Einflüssen durch Temperatur folgende Maßnahmen vorgesehen:
- Eine von der für den Transportwagen schädliche Temperatur im Werkstückraum verschiedene Temperatur im Fahrraum des Transportwagens.
- Flexible Abdeckungen an Übergangsbereichen vom Werkstückraum zum Fahrraum.
- Beaufschlagung des Transportwagens mit einem Luftstrom mit unterschiedlicher Temperatur.
- Spülen des Fahrraums mit einem Luftstrom mit unterschiedlicher Temperatur.
- Temperierelemente am Fahrzeug oder an Fahrzeugkomponenten zur Erzeugung einer unschädlichen Temperatur.
- Thermisch isolierende Komponenten am Fahrzeug oder an Fahrraumabdeckungen.

Zur Verringerung von ungünstigen Einflüssen durch Feuchtigkeit und Partikel sind folgende Maßnahmen vorgesehen:
- Flexible Abdeckungen an Übergangsbereichen vom Werkstückraum zum Fahrraum.
- Ein vom Werkstückraum verschiedener Luftdruck im Fahrraum.
- Gerichtete Luftströmung im Fahrraum.
- Formschlüssige Antriebskomponenten am Transportwagen und an der Schiene in gefährdeten Bereichen, beispielsweise durch eine Kette auf der Schiene und ein Zahnrad am Fahrzeug.
- Externe Antriebselemente zur Bewegung des Fahrzeugs in gefährdeten Bereichen, insbesondere Schleppförderer.

Beispielhaft zeigt die Fig. 3a die Anordnung der Tragschiene 10 in einem Kanal 28 (oder Fahrraum), der von einer verschwenkbaren Abdeckung 29 nach oben begrenzt ist. Die verschwenkbare Abdeckung 29 ist im geschlossenen Zustand von einer Person 30 begehbar und weist mittig ein Lamellenprofil 31 auf, das von einem Tragarm 32 des Transportwagens 22 durchgriffen wird (Fig. 3b). Beim Vor- und Zurückfahren des Tragwagens 22 werden die Lamellen der Lamellenprofile 31 angehoben oder abgesenkt, so dass der Spalt zwischen den einzelnen Elementen der Abdeckung 29 geschlossen ist, wenn kein Tragarm 32 die Abdeckung 29 durchgreift.

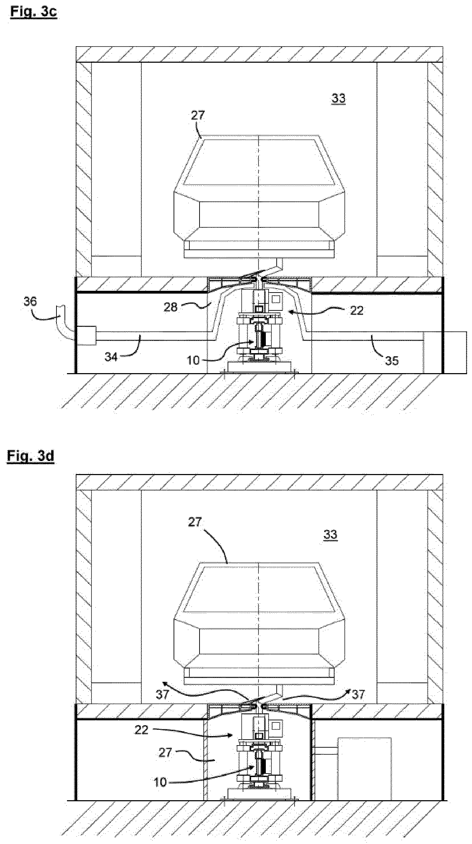

Die Fig. 3c, d zeigen den Verlauf der Förderanlage durch eine Trockenkammer 33 mit einer auf dem Transportwagen 22 angeordneten Karosserie 27. In der Trockenkammer 33 herrschen vergleichsweise hohe Temperaturen, was die ungestörte Funktionsweise der Förderanlage behindern würde. Um die Förderanlage im Kanal 28 hinreichend zu kühlen, ist nach Fig. 3c ein Kühlkanal 34 mit einem rechtsseitigen Kühllufteinlass 35 und einem linksseitigen Auslass 36 vorgesehen. Eine alternative Ausführungsform mit einer Kühlung des gesamten Kanals 28 zeigt Fig. 3d. Hiernach strömt Kaltluft entlang der Pfeile 37 auch in die Trockenkammer 33 ein, was für manche Anwendungen vorteilhaft sein kann.

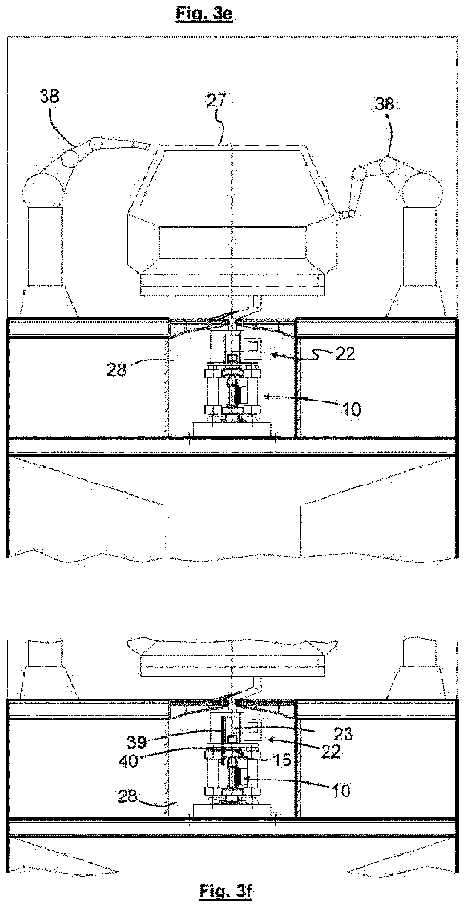

Fig. 3e zeigt die Förderanlage innerhalb einer Applikation, bei der Arbeiten an der Karosserie 27 durch Roboter 38 verrichtet werden. Der Detailausschnitt (Fig. 3f) zeigt eine Ausführungsform der Förderanlage, bei der das Antriebsrad 23 des Transportwagens 22 ein zusätzliches Kettenrad 39 aufweist, das in ein Profil 40 eingreift (oder ein Profil 40 kämmt), das linksseitig der Antriebslauffläche 15 ausgebildet ist. Das Profil 40 kann als Kette oder als Zahnstange ausgebildet sein. Der formschlüssige Vortrieb wird vorzugsweise dann eingesetzt, wenn die Haftung des Antriebsrades 23 auf der Antriebslauffläche 15 so gering ist, dass das Antriebsrad 23 droht durchzudrehen und somit Vortriebsverluste entstehen würden.

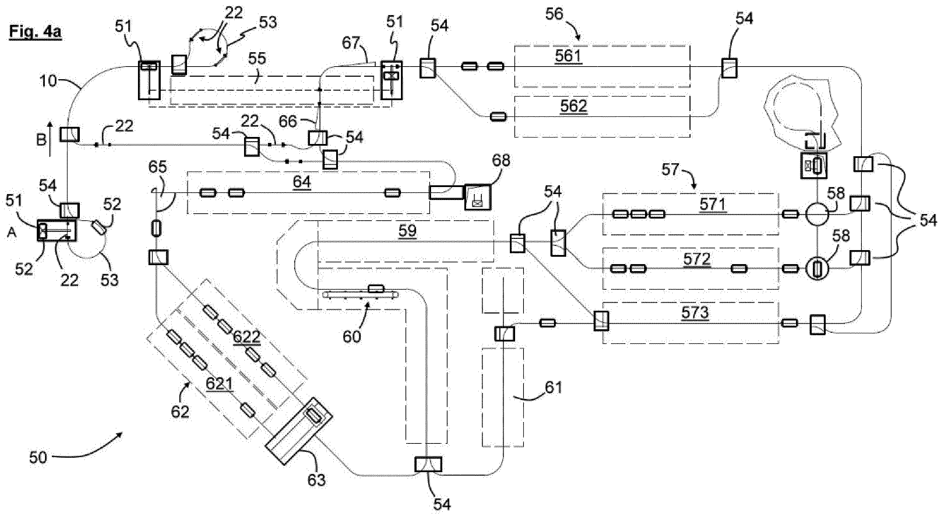

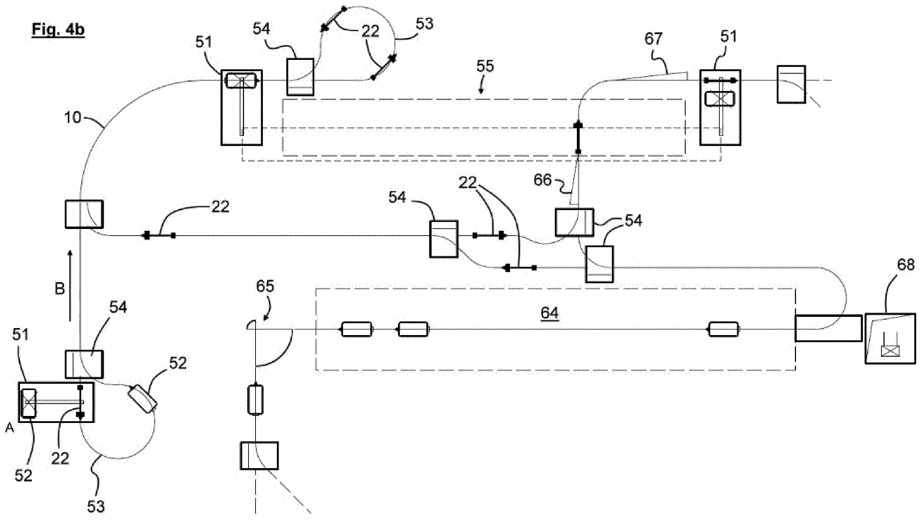

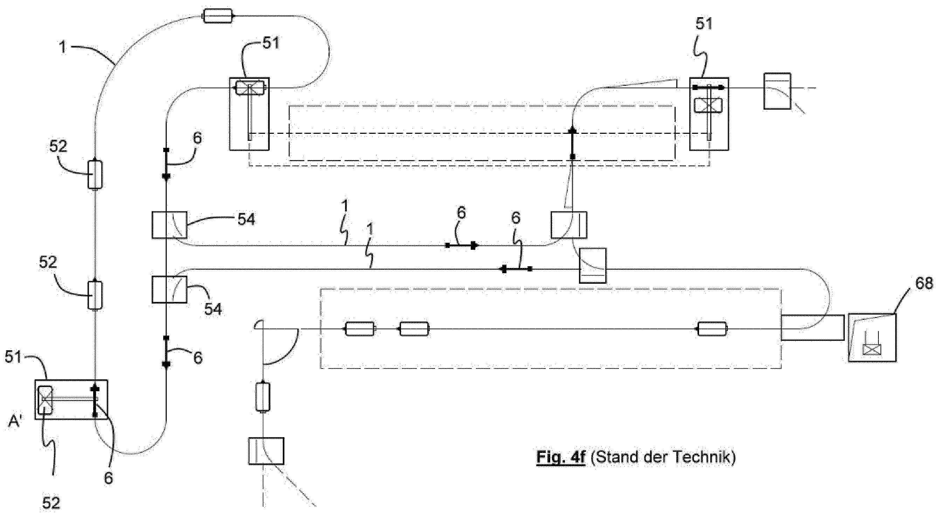

Fig. 4a zeigt eine beispielhafte Produktionsanlage 50 mit mehreren Prozessen, die von einer Förderanlage der erfindungsgemäßen Art mit einer Tragschiene der erfindungsgemäßen Art verbunden sind. Ein Werkstück kann auf unterschiedlichen Pfaden durch diese Produktionsanlage fahren und dabei zumindest teilweise in unterschiedlichen Prozessen behandelt werden. Ein beispielhafter Durchlauf durch die Produktionsanlage 50 wird nachfolgend auch mit Bezug auf die Fig. 4b - d erläutert, die jeweils die Prozesse in vergrößerter Ansicht zeigen.

Der Produktionsanlage 50 wird zunächst bei A vom Rohbau ein Werkstück 52 übergeben, wozu eine geeignete Übergabe 51 angeordnet ist (Fig. 4a, b). Dort wird ein leerer Transportwagen 22 von einer Wendeschleife 53 kommend mit einem Werkstück 52 bestückt, das in Pfeilrichtung B weitertransportiert wird. Bei einer weiteren Übergabe 51 wird das Werkstück 52 einer weiteren Transportvorrichtung übergeben, die das Werkstück 52 durch ein Bad 55 zur kathodischen Tauchlackierung (KTL) führt. Die leeren Transportwagen 22 werden durch die Wendeschleife 53 gedreht und fahren auf derselben Tragschiene 10 zurück zur ersten Übergabe 51 bei A, wo sie das nächste Werkstück 52 aufnehmen.

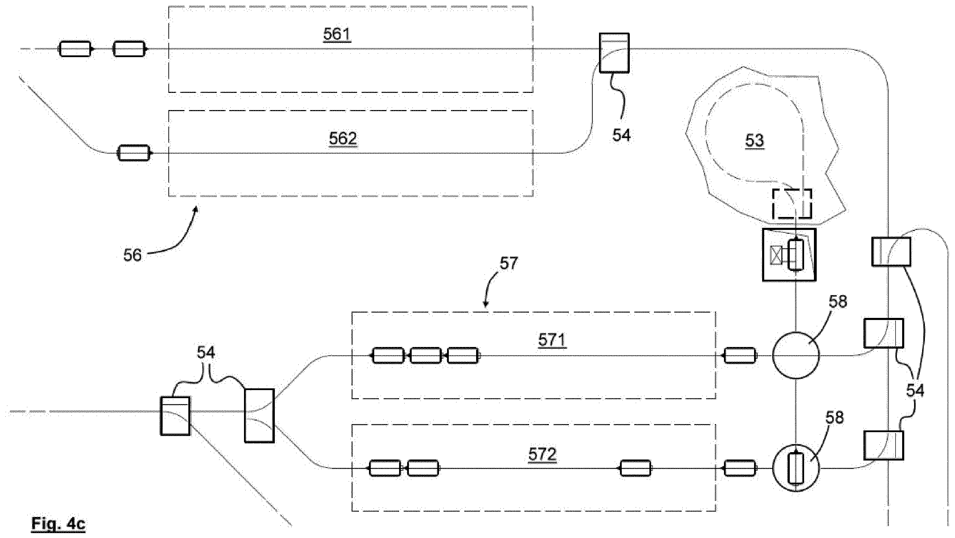

Nach dem KTL-Tauchbad 55 ist eine Übergabe 51 angeordnet, die das Werkstück 52 einem Transportwagen 22 zur Behandlung des Werkstücks 52 in einem KTL-Trockner 56 übergibt (Fig. 4a, c). Der KTL-Trockner 56 besitzt zwei Trocknerkammern 561, 562, die wahlweise von dem Werkstück 52 durchlaufen werden. Vor und hinter dem KTL-Trockner 56 sind Weichen 54 angeordnet.

Dem KTL-Trockner 56 ist ein Pufferbereich 57 nachgeschaltet (Fig. 4a, c), in dem die Werkstücke 52 zwischengelagert werden. Es sind drei Pufferabschnitte 571, 572, 573 vorgesehen. Den Pufferbereichen 571, 572 ist jeweils ein Drehtisch 58 vorgeschaltet, die ein Werkstück optional einer Wendeschleife 53 zuführen. Durch die Befahrbarkeit der Tragschiene 10 in beide Richtungen und in beliebiger Orientierung des Transportwagens 22 ist der Weg zwischen den Drehtischen 58 und der Wendeschleife 53 in beide Richtungen befahrbar und die Drehtische 58 müssen keine Leerdrehungen durchführen, um einen Transportwagen 22 mit gedrehter Orientierung aufzunehmen.

Der Pufferbereich 573 ist in beide Richtungen befahrbar und übernimmt sowohl Werkstücke 52 aus dem KTL-Trockner 56 als auch aus einer Qualitätskontrolle, auf die nachfolgend noch eingegangen wird.

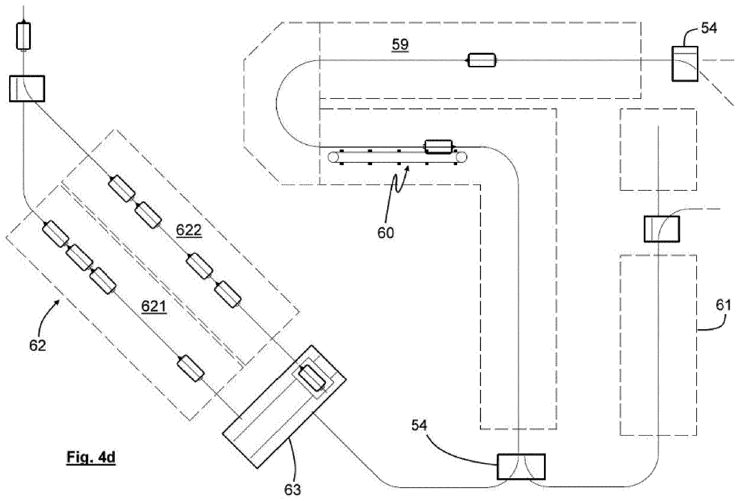

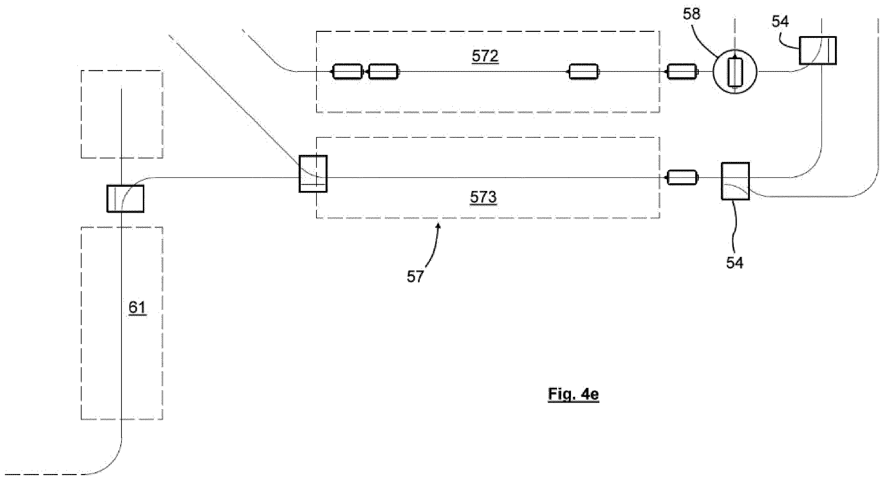

Ausgehend vom Puffer 57 werden die Werkstücke 52 über entsprechend angeordnete Weichen 54 einer Applikation 59 zugeführt (Fig. 4a, d), in der unterschiedliche Arbeiten gegebenenfalls robotergesteuert an den Werkstücken 52 verrichtet werden. Beispielhaft ist in der Applikation 59 ein Schleppbereich 60 dargestellt, bei dem die Tragschiene 10 ein Profil besitzt, so dass ein Kettenrad mit einem formschlüssigen Eingriff in das Profil für einen formschlüssigen Vortrieb sorgt. Durch eine weitere Weiche 54 können die Werkstücke 52 nach der Applikation 59 wahlweise einem Kontrollbereich 61 oder einem weiteren Prozess zugeführt werden. Der Kontrollbereich 60 (Fig. 4a, e) ist rückführend mit dem Pufferbereich 573 verbunden, so dass vorläufig aussortierte Werkstücke 52 erneut der Applikation 59 zugeführt werden können.

Der weitere Prozess ist beispielsweise ein weiterer Trockner 62 mit zwei Trocknerbereichen 621, 622 (Fig. 4a, d). Die Übergabe des Werkstücks 2 in den jeweiligen Trocknerbereich 621, 622 erfolgt im vorliegenden Fall über einen Querverschiebewagen 63.

Dem Trockner 62 ist eine Endmontage 64 nachgeschaltet (Fig. 4a, b), wobei zwischen dem Trockner 62 und der Endmontage 64 ein Schwenktisch 65 angeordnet ist. Nach der Endmontage 64 erfolgt die Abgabe des Werkstücks 52 an den Versand 68, womit die Produktion beendet ist. Der leere Transportwagen 22 fährt wahlweise zur ersten Übergabe 51 bei A oder zur Übergabe 51 vor dem KTL-Trockner 56, je nach dem an welcher Stelle der Produktion leere Transportwagen 22 benötigt werden. Im dargestellten Ausführungsbeispiel führt der Abschnitt zwischen der Endmontage 64 und dem KTL-Trockner 56 unter dem KTL-Bad 55 hindurch, wozu ein Gefälle 66 und eine anschließende Steigung 67 angeordnet ist. Beides lässt sich mit der erfindungsgemäßen Förderanlage gegebenenfalls auch über einen Schleppbereich realisieren.

Insgesamt ergibt sich durch die beidseitige Befahrbarkeit der Tragschiene für eine solche Prozessanlage ein deutlich reduzierter apparativer Aufbau und Leerfahrten (beziehungsweise Leerdrehungen) können vermieden werden. Beispielsweise ist der Prozessabschnitt aus Fig. 4b in Fig. 4d so dargestellt, wie er nach dem Stand der Technik ausgestaltet ist. Bei A' wird der Produktionsanlage ein Werkstück 52 übergeben, in dem ein leerer Transportwagen 6 mit dem Werkstück 52 bestückt wird. Von dort aus fährt der Transportwagen 6 bis zu einer Übergabe 51, wo die Übergabe auf eine andere Fördertechnik erfolgt. Der Rückweg zur Werkstückaufnahme bei A' erfolgt anschließend entlang einer separaten Tragschiene 1, weil eine Befahrung der Tragschiene 1 nicht in beide Richtungen bei umgekehrter Orientierung des Transportwagens 6 möglich ist. Für die Verbindung muss daher eine wesentlich längere Transportstrecke installiert sein, die einen hohen Platzbedarf hat und was zusätzlichen Wartungsbedarf schafft.

Auch für die Verbindung zwischen dem Versand 68 und den Übergaben 51 (bei A' oder vor dem KTL-Trockner 56) sind nachteiligerweise nach dem Stand der Technik zwei Tragschienen erforderlich.

**Bezugszeichen**

| | | | |
|---|---|---|---|
| 1 | Tragschiene | 2 | Förderanlage |
| 3 | Antriebslauffläche | 4 | Ablauffläche |
| 5 | Träger | 6 | Transportwagen |
| 7 | Antriebsrolle | 8 | Führungsrolle |
| 9 | Fahrwerksaufhängung | 10 | Tragschiene |
| 11, 11' | Nuten | 12, 12' | Klemmelemente |
| 13 | Träger | 14 | Boden |
| 15 | Antriebslauffläche | 16 | Ablaufflächen |
| 17 | Einschnürung | 18 | Stromschiene |
| 19, 19' | Auflagen | 20 | Profile |
| 21 | Abtropfkante | 22 | Transportwagen |
| 23 | Antriebsrad | 24 | Führungsräder |
| 25 | Stromabnehmer | 26 | Werkstückaufnahme |
| 27 | Karosserie | 28 | Kanal |
| 29 | Abdeckung | 30 | Person |
| 31 | Lamellenprofil | 32 | Tragarm |
| 33 | Trocknerkammer | 34 | Kühlkanal |
| 35 | Kühllufteinlass | 36 | Auslass |
| 37 | Pfeile | 38 | Roboter |
| 39 | Kettenrad | 40 | Profil |
| 50 | Produktionsanlage | 51 | Übergabe |
| 52 | Werkstück | 53 | Wendeschleife |
| 54 | Weichen | 55 | Bad (KTL) |
| 56 | KTL-Trockner | 561 | KTL-Trocknerbereich |
| 562 | KTL-Trocknerbereich | 57 | Puffer |
| 571 | Pufferbereich | 572 | Pufferbereich |
| 573 | Pufferbereich | 58 | Drehtisch |
| 59 | Applikation | 60 | Schleppbereich |
| 61 | Kontrollbereich | 62 | Trockner |
| 621 | Trocknerbereich | 622 | Trocknerbereich |
| 63 | Querverschiebewagen | 64 | Endmontage |
| 65 | Schwenktisch | 66 | Gefälle |
| 67 | Steigung | 68 | Versand |
| 69 | Stiftaufnahmen | | |

## Patentansprüche

1. Eine 1-spurige Förderanlage, insbesondere eine 1-spurige Elektrobodenbahn, mit einer Tragschiene (10), die eine obere Antriebslauffläche (15) und mindestens eine links- und eine rechtsseitige Ablauffläche (16) besitzt und einem auf der Tragschiene (10) verfahrbaren Transportwagen (22) mit einem Fahrwerk aus mindestens einem Antriebsrad (23), das auf der Antriebslauffläche (15) der Tragschiene (10) abrollt, und seitlichen Führungsrädern (24), die auf den links- und rechtsseitigen Ablaufflächen (16) der Tragschiene (10) abrollen,
**dadurch gekennzeichnet, dass**
links- und rechtsseitig der Tragschiene (10) zumindest abschnittsweise Stromschienen (18) angeordnet sind, die mit mindestens einem Stromabnehmer (25) des Transportwagens (22) kontaktierbar sind und dass die Tragschiene (10) an der der Antriebslauffläche (15) gegenüberliegenden Seite eine mittelbare oder unmittelbare Bodenbefestigung aufweist, sodass der Transportwagen (22) in beiden Richtungen und um 180° gedreht auf der Tragschiene (10) verfahrbar ist.

2. Förderanlage nach Anspruch 1, **dadurch gekennzeichnet, dass** zur Bodenbefestigung der Tragschiene (10) eine Schienenklemmung vorgesehen ist, indem vorzugsweise beidseitig der Tragschiene (10) Klemmelemente (12, 12') angeordnet sind, die einerseits jeweils in eine Nut (11, 11') der Tragschiene (10) eingreifen und andererseits unmittelbar mit dem Boden (14) oder einem Träger (13) lösbar befestigbar sind, wobei die mindestens eine Nut (11, 11') vorzugsweise unterhalb der Ablauffläche (16) angeordnet ist.

3. Förderanlage nach einem der Ansprüche 1 oder 2, **dadurch gekennzeichnet, dass** links- und rechtsseitig der Tragschiene (10) jeweils zwei vertikal voneinander beabstandete Ablaufflächen (16) angeordnet sind, zwischen denen die Stromschienen (18) verlaufen.

4. Förderanlage nach einem der Ansprüche 1 bis 3, **dadurch gekennzeichnet, dass** die Bodenbefestigung der Tragschiene (10), insbesondere die Nuten (11, 11') zur Aufnahme der Klemmelemente (12, 12'), unterhalb aller Ablaufflächen (16) angeordnet ist, so dass der Transportwagen (22) mit einer links- und rechtsseitigen Aufhängung der seitlichen Führungsräder frei auf der Tragschiene (10) verfahrbar ist.

5. Förderanlage nach einem der Ansprüche 3 oder 4, **dadurch gekennzeichnet, dass** an den beiden oberen Ablaufflächen (16) jeweils eine Abtropfkante (21) ausgebildet ist.

6. Förderanlage nach einem der Ansprüche 1 bis 5, **dadurch gekennzeichnet, dass** das Antriebsrad (23) des Transportwagens (22) koaxial und drehfest mit einem Kettenrad (39) verbunden ist, das formschlüssig in ein korrespondierendes Profil (40) eingreift und einen formschlüssigen Vortrieb schafft.

7. Förderanlage nach Anspruch 6, **dadurch gekennzeichnet, dass** das Profil (40) eine Kette oder Zahnstange ist, die links- und/oder rechtsseitig der Antriebslauffläche (15) in einer Aufnahme der Tragschiene (10) vorzugsweise formschlüssig gelagert ist.

## Claims

1. A 1-track conveyor system, in particular a 1-track electric floor conveyor, with a support rail (10) which has an upper drive running surface (15) and at least one left-hand and one right-hand run-off surface (16) and a transport trolley (22) which can be moved on the support rail (10) with a running gear made up of at least one drive wheel (23) which rolls on the drive running surface (15) of the support rail (10), and lateral guide wheels (24) which run on the left-hand and right-hand run-off surfaces (16) of the support rail (10) roll off,
**characterized in that**
at least in sections on the left and right of the support rail, conductor rails (18) are arranged, which are contactable with a least one current collector (25) of the transport carriage and that the support rail (10) has a direct or indirect floor attachment on the side opposite to the drive running surface (15), so that the transport carriage (22) can be moved on the support rail (10) in both directions and rotated by 180°.

2. Conveyor system according to Claim 1, **characterized in that** rail clamping is provided for fastening the support rail (10) to the floor, **in that** clamping elements (12, 12') are preferably arranged on both sides of the support rail (10), which on the one hand are each fitted into a groove (11, 11') of the support rail (10) and on the other hand are releasably attachable directly to the floor (14) or a support (13), the at least one groove (11, 11') preferably being arranged below the run-off surface (16).

3. Conveyor system according to one of Claims 1 or 2, **characterized in that** two vertically spaced run-off surfaces (16) are arranged on the left and right of the support rail (10), between which the conductor rails (18) run.

4. Conveyor system according to one of Claims 1 to 3, **characterized in that** the floor attachment of the support rail (10), in particular the grooves (11, 11') for receiving the clamping elements (12, 12'), is arranged below all run-off surfaces (16), so that the transport carriage (22) can be moved freely on the support rail (10) with a left-hand and right-hand suspension of the lateral guide wheels.

5. Conveyor system according to one of Claims 1 to 4, **characterized in that** a drip edge (21) is formed on each of the two upper run-off surfaces (16).

6. Conveyor system according to one of Claims 1 to 5, **characterized in that** the drive wheel (23) of the transport carriage (22) is coaxially and non-rotatably connected to a chain wheel (39), which engages in a form-fitting manner in a corresponding profile (40) and creates a form-fitting propulsion.

7. Conveyor system according to Claim 6, **characterized in that** the profile (40) is a chain or toothed rack which is mounted, preferably in a form-fitting manner, on the left and/or right side of the drive running surface (15) in a receptacle of the support rail (10).

## Revendications

1. Installation de convoyage à voie unique, en particulier convoyeur électrique au sol à voie unique, comprenant un rail de support (10) qui présente une surface de roulement motrice supérieure (15) et au moins une surface de descente de côté gauche et une surface de descente de côté droit (16), ainsi qu'un chariot de transport (22) qui peut être déplacé sur ledit rail de support (10) et qui comprend un châssis constitué d'au moins une roue motrice (23) qui roule sur la surface de roulement motrice (15) du rail de support (10) et de roues de guidage latérales (24) qui roulent sur les surfaces de descente de côté gauche et de côté droit (16) du rail de support (10), **caractérisée par le fait que** des rails d'alimentation en courant (18) sont disposés au moins par sections du côté gauche et du côté droit du rail de support (10), qui peuvent être mis en contact avec au moins un capteur de courant (25) du chariot de transport (22) et que le rail de support (10) présente, du côté situé en vis-à-vis de la surface de roulement motrice (15), une fixation au sol indirecte ou directe de sorte que le chariot de transport (22) peut être déplacé dans les deux sens et être tourné d'environ 180° sur le rail de support (10).

2. Installation de convoyage selon la revendication 1, **caractérisée par le fait que**, pour la fixation au sol du rail de support (10), un serrage de rail est prévu en disposant des éléments de serrage (12, 12') de préférence des deux côtés du rail de support (10), qui, d'un côté, s'engagent chacun dans une rainure (11, 11') du rail de support (10) et qui, d'autre part, peuvent être fixés chacun de manière amovible directement au sol (14) ou à un support (13), dans laquelle ladite au moins une rainure (11, 11') est disposée de préférence au-dessous la surface de descente (16).

3. Installation de convoyage selon l'une quelconque des revendications 1 ou 2, **caractérisée par le fait que** respectivement deux surfaces de descente (16) qui sont espacées verticalement l'une de l'autre et entre lesquelles s'étendent les rails d'alimentation en courant (18) sont disposées du côté gauche et du côté droit du rail de support (10).

4. Installation de convoyage selon l'une quelconque des revendications 1 à 3, **caractérisée par le fait que** la fixation au sol du rail de support (10), en particulier les rainures (11, 11') destinées à loger les éléments de serrage (12, 12') sont disposées au-dessous de toutes les surfaces de descente (16) de sorte que le chariot de transport (22) puisse être déplacée librement sur le rail de support (10) avec une suspension gauche et droite des roues de guidage latérales.

5. Installation de convoyage selon l'une quelconque des revendications 3 ou 4, **caractérisée par le fait qu'**un bord d'égouttement (21) est réalisé respectivement sur les deux surfaces de descente supérieures (16).

6. Installation de convoyage selon l'une quelconque des revendications 1 à 5, **caractérisée par le fait que** la roue motrice (23) du chariot de transport (22) est reliée de façon coaxiale et solidaire en rotation à une roue de chaîne (39) qui s'engage à engagement positif dans un profil correspondant (40) et crée une avance à engagement positif.

7. Installation de convoyage selon la revendication 6, **caractérisée par le fait que** le profil (40) est une chaîne ou une crémaillère qui est logée, de préférence à engagement positif, dans un logement du rail de support (10) du côté gauche et/ou droit de la surface de roulement motrice.
